# EUROPÄISCHE PATENTSCHRIFT

(11) **EP 1 167 100 B1**
(45) Veröffentlichungstag und Bekanntmachung des Hinweises auf die Patenterteilung: **17.01.2007**
(21) Anmeldenummer: 01112534.1
(22) Anmeldetag: 23.05.2001
(51) Int. Cl.: B60J 7/10

(54) **Verdeck**
Vehicle top
Capote

(30) Priorität: 26.06.2000 DE 10031068
(43) Veröffentlichungstag der Anmeldung: 02.01.2002
(73) Patentinhaber: Bayerische Motoren Werke Aktiengesellschaft, 80809 München (DE)
(72) Erfinder: Minatti, Johann, 80935 München (DE)

(56) Entgegenhaltungen:
- DE-U- 29 515 130
- GB-A- 2 323 337
- US-A- 5 775 767

## Beschreibung

Die Anmeldung betrifft ein Verdeck für ein Kraftfahrzeug, insbesondere für ein geländegängiges Freizeitfahrzeug, gemäß dem Oberbegriff von Anspruch 1 und ein Personenkraftfahrzeug nach Anspruch 15.

Nach dem Stand der Technik sind Verdecke für Kraftfahrzeuge bzw. Personenkraftfahrzeuge zum Abdecken bzw. Verschließen einer im Dachbereich teilweise geöffneten Fahrgastzelle vorgesehen. Dabei erlauben derartige Verdecke üblicher Weise z.B. durch manuelles Lösen von starren Einzelelementen oder durch verschiedenartige Antriebe das Öffnen der Fahrgastzelle aus einem verschlossenen Zustand heraus.

Dieses Wandeln des Fahrzeuges erfordert insbesondere im Fall geländegängiger Freizeitfahrzeuge, wie z.B. Off road- und Touring-Fahrzeuge oder ähnlichen Fahrzeugen, einen erhöhten Zeitaufwand und ist nur im Stillstand des Fahrzeugs möglich. Üblicherweise muß bei Fahrzeugen der genannten Art ein wesentlicher Teil eines Heckbereichs der sehr großräumigen Überdachung einer Fahrgastzelle entfernt oder ergänzt werden, je nach dem ob die Fahrgastzelle geöffnet oder verschlossen werden soll. Dazu sind häufig mindestens zwei handwerklich versierte und kräftige Personen gleichzeitig erforderlich.

Für die von einem derartigen Fahrzeug hinweggeklappten oder sonstig entfernten Dachteile gibt es insbesondere im Fall von harten oder teilweise harten Dachsegmenten in dem Fahrzeuge selber häufig keine Ablagemöglichkeit, so daß sie separat außerhalb des Fahrzeugs gelagert werden müssen. So ist ein Benutzer eines Fahrzeugs der genannten Klasse für einen Umbau bzw. ein Öffnen oder Schließen seines Fahrzeugs z.B. an den Ort seiner Garage gebunden. Weiter ist bei den vorstehend beschriebenen Verdeck-Systemen bei geöffnetem Zustand des Verdecks im Fahrzeug kein absperrbarer Kofferraum mehr vorhanden.

Wenngleich Freizeitfahrzeuge im wesentlichen dem Transport von Menschen dienen, so sollen sie sich dennoch durch eine hohe Funktionalität auszeichnen. Konkret bedeutet dies insbesondere, daß ein derartiges Fahrzeug auch als Lastenträger verwendet werden kann, und das auch nach der Demontage bzw. dem Wegklappen eines Teil der Überdachung. Dementsprechend muß stets ein gut zugänglicher Teil des Koffer- bzw. Laderaums zur Aufnahme von Lasten zur Verfügung stehen. Die Lasten müssen, beispielsweise in der Form von Fahrrädern oder Kisten, für den Benutzer bequem ein- und ausladbar sein. Hier erweisen sich bekannte Verdecksysteme als nachteilig, da sie entweder einen großen Teil des Laderaums mindestens bei geöffneter Überdachung der Fahrgastzelle selber beanspruchen oder in einer Packstellung das Ein- bzw. Ausladen im Bereich einer Heckklappe behindern.

Es ist daher die Aufgabe der vorliegenden Erfindung, ein Verdeck der vorstehend genannten Art mit einer wesentlich vereinfachten Bedienung und Handhabung innerhalb eines Fahrzeugs zu schaffen.

Die Aufgabe wird erfindungsgemäß durch ein Verdeck mit den Merkmalen von Anspruch 1, und ein Personenkraftfahrzeug nach Anspruch 15 gelöst.

Ein erfindungsgemäßes Verdeck zeichnet sich demnach dadurch aus, daß sich im rückwärtigen Fahrzeug-Endbereich, z.B. ab einer C-Säule, ein Abschnitt aus mindestens teilweise flexiblem Material befindet, insbesondere ein Stoffverdeck. Dieser Abschnitt ist an einer beweglichen Einrichtung fixiert. Durch ein Verschieben der beweglichen Einrichtung gegen die Fahrtrichtung eines so ausgerüsteten Fahrzeugs hin auf die C-Säule zu wird eine Öffnung im Dachbereich über einem Kofferraum bzw. in einem Bereich des Kofferraums erzeugt. Eine derartige Bewegung ist in einfacher Weise durchführbar, wobei vorteilhafterweise keine Elemente aus dem Dachbereich entnommen werden müssen.

Das Stoffverdeck kann in einer geöffneten Stellung vorteilhafter Weise zwischen der starren C-Säule und der beweglichen Einrichtung verstaut werden. Durch diese Anordnung wird eine insgesamt sehr platzsparende und kompakte Packstellung erzeugt, die die nutzbare Ladefläche innerhalb eines Fahrzeug-Ladebereichs nur marginal einschränkt.

In einer Weiterbildung weist ein erfindungsgemäßes Verdeck vorteilhafterweise eine relativ hohe Struktursteifigkeit auf. Das wird insbesondere dadurch erreicht, daß die bewegliche Einrichtung als im Dachbereich umlaufender Strukturrahmen ausgebildet ist und so als Säule mit der Funktion eines zusätzlichen Überrollbügels in geschlossenem und auch in geöffnetem Zustand zur Verfügung steht. Die bewegliche Einrichtung insbesondere in Form einer D- Säule des Fahrzeugs ausgebildet. Das gesamte Stoffverdeck ist vorteilhafterweise an der vorstehend dargestellten beweglichen D- Säule fest angeschlagen. Dabei bietet die bewegliche D- Säule als stabiles Fahrzeugstrukturteil alle konstruktiven Möglichkeiten einen dauerhaft dichten und zuverlässigen Übergang zwischen den verschiedenen Komponenten des Verdecks auszubilden.

Der flexibler Teil des Verdecks bzw. ein Stoffverdeck wird von einer Mehrgelenkkette getragen, also einem Stabgetriebe in Form einer gekoppelten Reihe von Viergelenkgliedern, die zusammen eine vorbestimmte Kinematik aufweisen. In Folge einer Verschiebung der beweglichen Einrichtung zum Öffnen oder Schließen hebt sich das Stoffverdeck entsprechend der Bewegungskurve der Mehrgelenkkette leicht an und wird mit einer vordefinierten Faltung verschoben. In dieser im wesentlichen translatorischen Bewegung kann auch eine rotatorische Komponente enthalten sein, beispielsweise um die C- und die D- Säule in einer geschlossenen Endlage des Verdecks und dementsprechend bei geöffneter Fahrgastzelle miteinander in optimale Anlage zu bringen.

Die Verschiebebahn befindet sich im wesentlichen auf der Höhe einer Brüstung der Ladefläche und läßt eine Verschiebung zwischen der C-Säule und der beweglichen D-Säule in einem weiten Bereich zu. Es ist bei einem Verdeck gemäß vorliegender Erfindung keine Demontage von Teilen nötig, vor allem nicht von Hand. Dabei ist gleichzeitig der antriebstechnische Aufwand auf ein Minimum reduzierbar. Der zusätzlich benötigte Bauraum ist ebenfalls sehr gering bemessen und befindet sich in einem für die Handhabung des Fahrzeugs bzw. das Be- und Entladen unkritischen Bereich. Aufgrund der hohen systembedingten Stabilität ist so eine Wandlung der Fahrgastzelle sogar im Fahrbetrieb möglich, vorzugsweise per Knopfdruck unter Ansteuerung durch einen hydraulischen Antrieb.

An dem Abschnitt aus mindestens teilweise flexiblem Material bzw. an einem Stoffverdeck ist im Bereich der beweglichen Einrichtung bzw. D- Säule eine stabile und harte Fläche angeordnet. Diese Fläche stellt im nach vorne geschobenen Zustand des Verdecks eine Abdeckung für die Falten des Stoffverdecks dar bzw. dient hier zu deren Aufnahme. Die harte Fläche im Bereich der D-Säule ist in einer Weiterbildung in Form eines Umschlags ausgebildet, vorzugsweise für die Aufnahme des im Bereich der C- Säule eingefalteten Stoffverdeckteils. Dazu weist der Umschlag einen ungefähr U-förmigen Querschnitt auf. Gleichzeitig ist dieser stabile Bereich vorteilhafterweise nutzbar für die Aufnahme von Dichtungen und diverse Anbauteilen, wie z.B. einer dritten Bremsleuchte in einem oberen Bereich, die auch bei geöffnetem Verdeck sichtbar ist und auch nicht durch Teile des eingefalteten Stoffverdeckteils verdeckt werden können.

In einer Weiterbildung der Erfindung ist eine Heckscheibe bei einem Öffnungsvorgang in eine Heckklappe einfahrbar ausgebildet. Die Heckklappe verbleibt als Verschluß und Sicherung einer Ladefläche beim Öffnen eines Verdecks in ihrer Lage, während die Heckscheibe bei teilweise entferntem Dach sehr ungeschützt wäre und zudem einen sehr hohen Windwiderstand aufweisen würde. Sie wird daher zuerst in die Heckklappe eingefahren, vorzugsweise noch vor der Einleitung der eigentlichen Öffnungsbewegung des Verdecks.

Alternativ ist die Heckscheibe an der beweglichen Einrichtung angeordnet. Sie ist zum rückwärtigen Öffnen der Fahrgastzelle vorzugsweise schwenkbar um eine horizontale Achse ausgebildet und wird so beim Verschieben der beweglichen Einrichtung stets mitgenommen, so daß in dieser Ausführungsform auch bei geöffnetem Verdeck eine geschlossene Fahrgastzelle gebildet werden kann. Unter Einbeziehung der vorstehenden technischen Varianten ergeben sich somit für die geschlossene Fahrgastzelle zwei Gestaltungsmöglichkeiten, wie zuvor nur für eine Fahrgastzelle im nach außen hin geöffneten Zustand. Zum Abnehmen der Heckscheibe kann sie zusätzlich aus einem leichten und bruchfesten Kunststoff bestehen, so daß auch bei dieser Ausführungsform eine große freie Ladefläche gebildet wird. Verstaut werden kann eine derartige Scheibe dann beispielsweise von Hand in einem Bereich der Heckklappe, so daß im Vergleich zur vorstehenden Ausführungsform bei sonst weitgehend gleicher Konstruktion der Antrieb in diesem Bereich eingespart werden kann.

Eine Integration einer Heckscheibe in den flexiblen Teil des Verdecks ist dagegen nur unter bestimmten Schwierigkeiten und bei Verteuerung der Konstruktion möglich, wie aus dem Bereich der Abdeckungen bei Cabriolets bekannt ist. So bietet das Einfahren der Heckscheibe in die Heckklappe auch einer starren Scheibe optimalen Schutz, wobei im Fall des geschlossenen Verdecks die bekannten Vorteile bzw. der Schutz einer starren Heckscheibe zur Verfügung steht. Die Heckklappe ist dabei beispielsweise seitlich oder unten am Chassis des Fahrzeugs angelenkt, so daß alle wesentlichen der derzeit gebräuchlichen Heck-Bauformen im Rahmen der vorliegenden Erfindung ohne wesentliche bauliche Anpassung übernommen werden können.

In einer bevorzugten Ausführungsform der Erfindung wird eine Kombination aus einem erfindungsgemäßen Verdeck bzw. Heckverdeck und einem Rollverdeck eingesetzt, wobei das Rollverdeck sich aus einem Bereich der starren C-Säule in Fahrtrichtung z.B. bis zur Windschutzscheibe erstreckt. Beide Systeme können z.B. elektromotorisch oder in Kombination hydraulisch angetrieben werden. Ein Antrieb und eine Vorrichtung zum Packen des Rollverdecks bzw. eine Speichervorrichtung sind bevorzugt im Bereich der C-Säule angeordnet. Durch diese Kombination wird eine maximale Öffnung des Dachbereichs erzielt, wobei durch die starre C- und die bewegliche D-Säule als Überrollschutz und Zellenversteifung gleichzeitig ein Maximum an Stabilität der Fahrgastzelle und somit ein Optimum an Sicherheit für die Insassen gewährleistet ist.

Schließlich ist ein erfindungsgemäßes Kraftfahrzeugverdeck in Form eines kompakten Moduls als komplettes System im abgelegten Zustand anlieferbar. Es kann in flexibler Weise an verschiedene Fahrzeugmodelle angepaßt werden, um diese Fahrzeuge auch nachträglich um wesentliche funktionelle Komponenten und die vorstehend exemplarisch aufgezeigten Vorteile zu erweitern.

Ein Verdeck gemäß vorliegender Erfindung kann unter Wahrung der vorstehend genannten Vorteile auch in einfacher Weise auf einen Einsatz in kleineren oder größeren Fahrzeugen angepaßt werden. So kann ein erfindungsgemäßes Verdeck bei einem kleineren Fahrzeug auch eine beweglichen C-Säule aufweisen, die zum Öffnen des Verdecks zu einer B- Säule hin bewegbar ist. Umgekehrt ist es im Rahmen der vorliegenden Erfindung auch möglich, ein bewegliches Stoffverdeck von einer starren Säule ausgehend über mehrere bewegliche Säulen hin zu einer starren Säule zu erstrecken. So kann ein erfindungsgemäßes Verdeck prinzipiell auch für einen Einsatz in einem 4- und mehrsitzigen Kraftfahrzeug angepaßt werden, bei dem dann beispielsweise in einer geöffneten Stellung nur noch der Frontbereich teilweise überdacht ist. Im Rahmen der Beschreibung wird der Übersichtlichkeit halber dennoch weiter nur von einem Verdeck mit starrer C-Säule mit einer beweglichen D-Säule zwischenliegendem Stoffverdeck ausgegangen, ohne daß die Erfindung auf diese Ausführungsform beschränkt werden soll.

Eine Ausführungsform der Erfindung wird nachfolgend anhand der Zeichnung näher beschrieben. In der Zeichnung zeigt:
- Fig. 1: eine perspektivische Darstellung einer Fahrgastzelle mit einem erfindungsgemäßen Verdeck in geschlossener Stellung,
- Fig. 2: das Verdeck von Fig. 1 bei geöffnetem Schiebedach,
- Fig. 3: eine perspektivische Darstellung der Fahrgastzelle von Fig. 1 mit dem erfindungsgemäßen Verdeck in einer Öffnungsstellung,
- Fig. 4: die Fahrgastzelle von Fig. 1 mit dem erfindungsgemäßen Verdeck in einer geöffneten Endstellung und
- Fig. 5: eine schematisierte Seitenansicht zur Darstellung der Wandlung der Fahrgastzelle mit zwei Varianten.

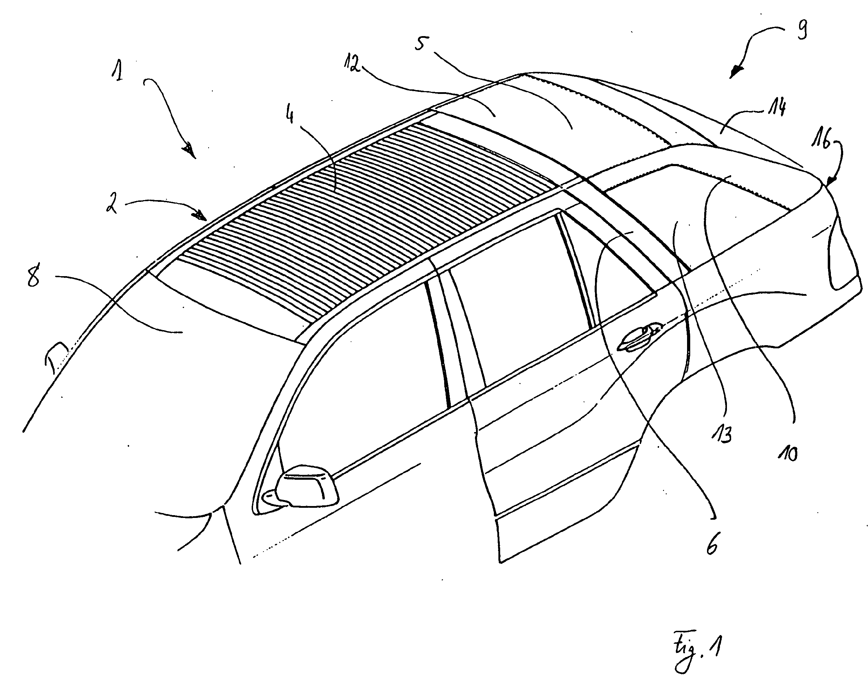

In Fig. 1 ist eine Fahrgastzelle 1 eines sportlich funktionell ausgelegten Freizeitfahrzeugs in einer perspektivischen Ansicht dargestellt. Die Fahrgastzelle 1 weist in ihrem Dachbereich 2 ein erfindungsgemäßes Verdeck 3 und ein Rollverdeck 4 auf. Das Verdeck 3 und das Rollverdeck 4 befinden sich in der Darstellung von Fig. 1 in einer geschlossener Stellung. In diesem Zustand erstreckt sich das Rollverdeck 4 von einer starren C-Säule 6 hin bis in den Bereich einer Windschutzscheibe 8. Das Verdeck 3 umfaßt in einem Heckbereich 9 des Freizeitfahrzeugs eine bewegliche Einrichtung in Form einer D- Säule 10 und eine flexible Abdeckung 12, die zwischen der beweglichen D- Säule 10 und der starren C-Säule 6 angeordnet ist. Die flexible Abdeckung 12 des Verdecks 3 besteht aus Stoff mit darin integrierten transparenten Elementen 13 aus einer Folie, die als weitere seitliche Fenster dienen.

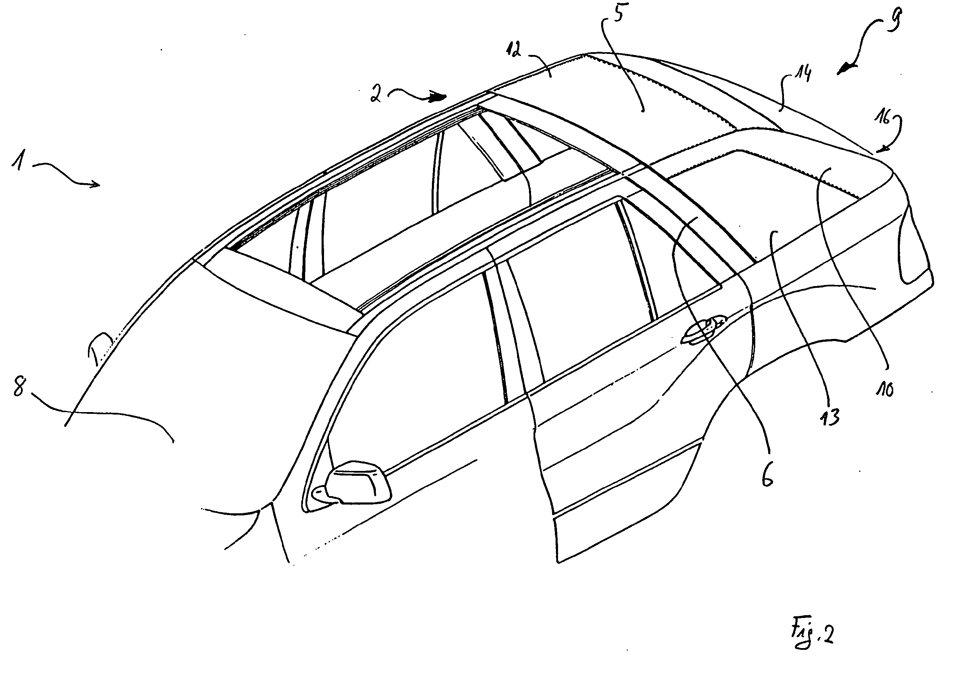

In der Darstellung von Fig. 2 ist nur das Rollverdeck 4 geöffnet. Es dient als stark vergrößertes Schiebedach, das unabhängig von dem Verdeck 3 betätigbar ist. Beim Öffnen gibt es einen wesentlichen Teil des Dachbereichs 2 ganz frei. Der Antrieb erfolgt über eine nicht weiter dargestellte Einrichtung elektromotorisch, die im Bereich der C-Säule 6 verdeckt angeordnet ist.

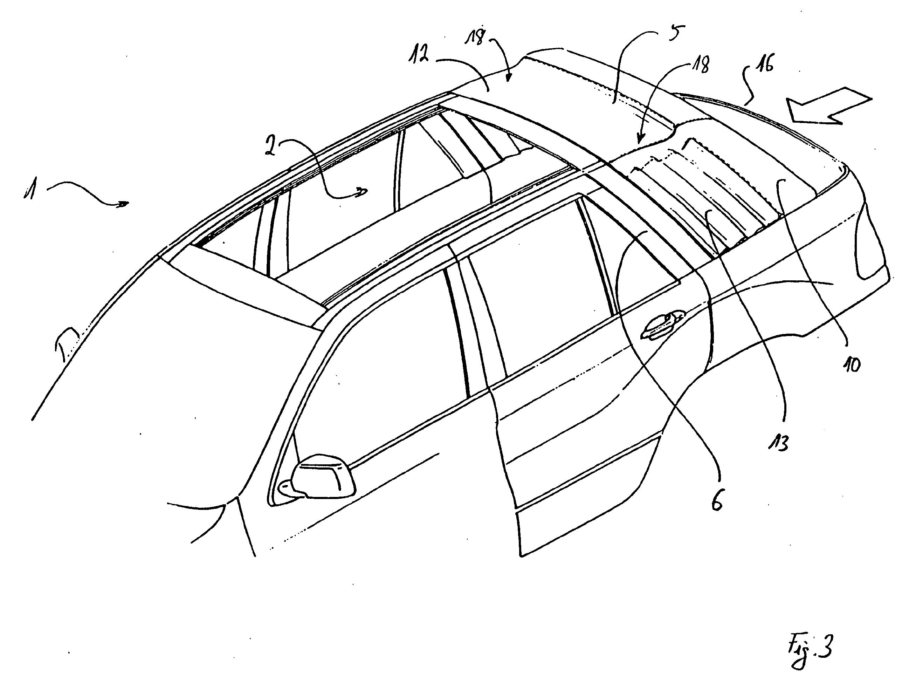

Fig. 3 zeigt einen Zwischenschritt beim zusätzlichen Öffnen des Verdecks 3. In diesem Zustand ist eine in Fig. 1 und Fig. 2 erkennbare Heckscheibe 14 bereits in eine Heckklappe 16 einfahren. Das Verdeck 3 schiebt sich durch Betätigung eines in den Abbildungen nicht sichtbaren hydraulischen Antriebs in Richtung des eingezeichneten Pfeils automatisch zusammen. Es wird in diesem Schritt die bewegliche D- Säule 10 im wesentlichen translatorisch aus dem Heckbereich 9 hin zu der starren C- Säule 6 verschoben. Dabei wird die flexible Abdeckung 12 des Verdecks 3 mit den darin angeordneten transparenten Elementen 13 in vordefinierter Weise geführt und in vorbestimmter Weise gefaltet. Dieses Verhalten wird durch zwei in den Abbildungen verdeckte und daher ebenfalls nicht dargestellte Viergelenk-Ketten bewirkt, die mechanisch mit dem Antrieb gekoppelt sind. Die Viergelenk-Ketten sind in Randbereichen 18 des Verdecks 3 angeordnet und erstrecken sich zwischen der starren C- Säule 6 und der beweglichen D- Säule 10.

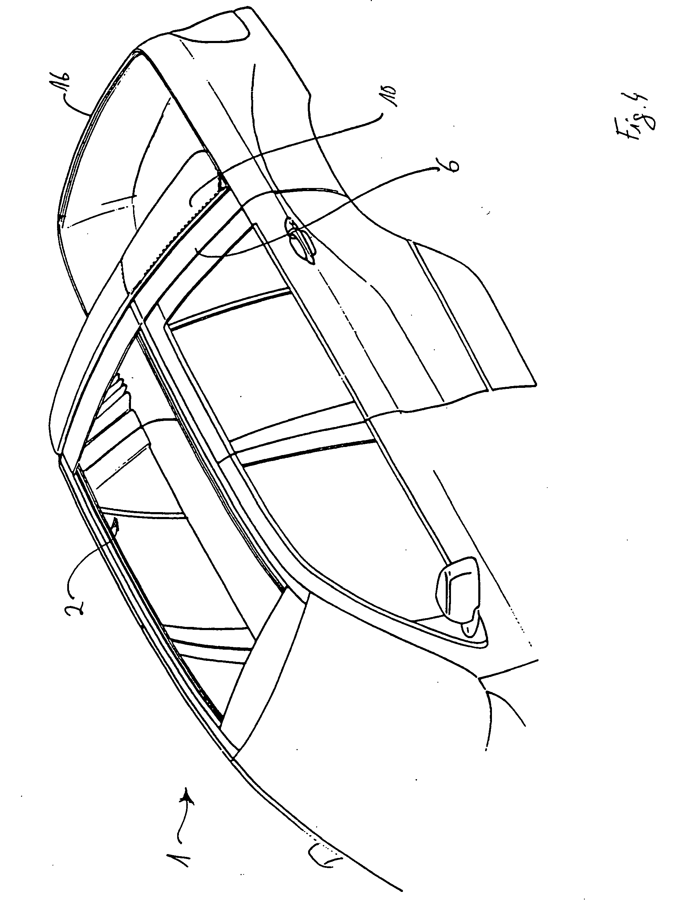

In der Darstellung von Fig. 4 ist ein geöffneter Endzustand dargestellt, in dem die flexible Abdeckung 12 des Verdecks 3 zwischen einem verstärkten überlappenden Bereich 17 der beweglichen D-Säule 10 zwischen der starren C-Säule 6 und der in seiner Endlage befindlichen D-Säule 10 angeordnet ist. In der dargestellten Ausführungsform umschließt der verstärkte, überlappende Bereich 17 die gefaltete flexible Abdeckung 12 des Verdecks 3 nach Art eines Umschlags. So sind die Faltungen außen nicht sichtbar. Zudem kann sich in diesem Bereich kein Schmutz festsetzen. Auch sind Beschädigung und/oder ein Abstehen der gefalteten flexiblen Abdeckung 12 ausgeschlossen. So wird auch das Strömungsgeräusch, wie Pfeifen oder Flattern im Wind, während der Fahrt wesentlich gemindert.

Ein Ladebereich im Heckbereich des Fahrzeugs ist nun völlig geöffnet und bleibt im Gegensatz zu der Situation bei Vorrichtungen nach dem Stand der Technik völlig frei zugänglich. Die Kombination aus der D-Säule 10 und der starren C-Säule 6 dient mit der dazwischen eingefalteten flexiblen Abdeckung 12 und dem überlappenden Bereich 17 einheitlich zusammen als sehr stabiler Überrollbügel.

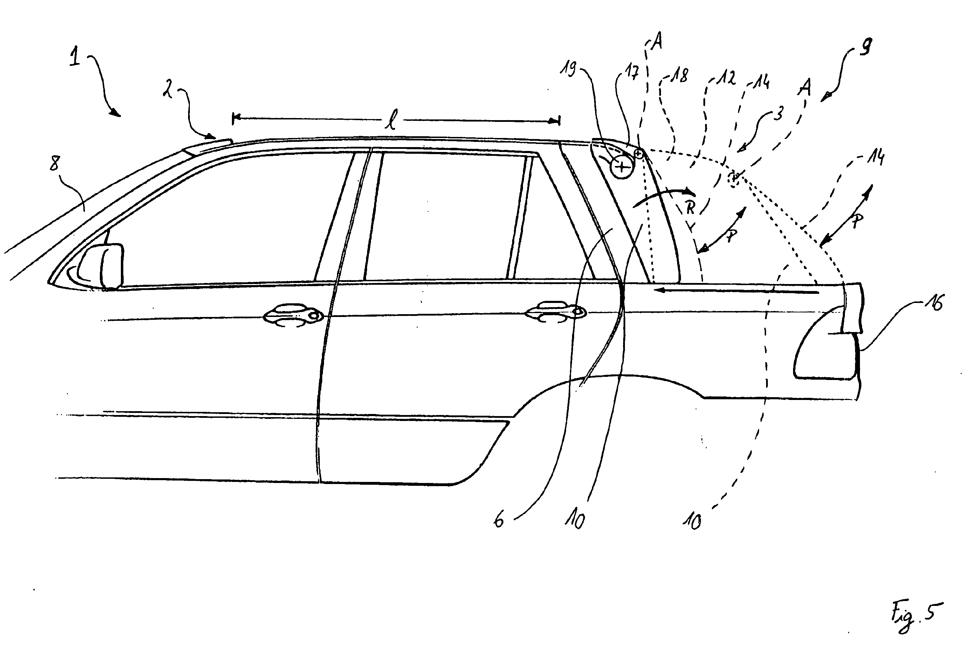

Die Wandlung des Fahrzeugs ist in der Abbildung von Fig. 5 in einer Seitenansicht gezeigt. In durchgezogenen Linien ist die geöffnete Form der Fahrgastzelle 1 dargestellt, wobei die Lage eines Speichers 19 für das aufgerollte Rollverdeck 4 unterhalb des verstärkten Bereichs 17 zwischen der C- Säule 6 und der D- Säule 10 angedeutet ist. Das Rollverdeck 4 deckt im geschlossenen Zustand den Dachbereich 2 über die eingezeichnete Länge I ab. Weiter ist in der Darstellung von Fig. 5 auch die Überlappung des verstärkten Bereichs 17 relativ zu der zusammengefalteten flexiblen Abdeckung 12 des Verdecks 3 und zu der C- Säule 6 zu sehen.

In gestrichelter Darstellung ist der geschlossene Zustand des Verdecks 3 eingezeichnet. Hier ist der gesamte Heckbereich 9 überdeckt und verschlossen. Dann ist auch die Heckscheibe 14 aus der Heckklappe 16 herausgefahren, so daß die Fahrgastzelle 1 dann vollständig geschlossen ist.

Zur Überführung von der geöffneten in die geschlossene Stellung und umgekehrt durchläuft die bewegliche D-Säule 10 zwar im wesentlichen eine translatorische Bewegung, es ist jedoch eine rotatorische Komponente entlang des in Fig. 5 eingezeichneten Pfeils R notwendig, um in der dargestellten Ausführungsform einen Höhenausgleich zwischen der C- Säule 6 und der D- Säule 10 zu schaffen. So wird auch eine optimierte Anlage und auch optisch ansprechende Parallelstellung bzw. Anpassung der Konturen zwischen diesen Säulen 6, 10 in der geöffneten Stellung des Verdecks 3 geschaffen. Zudem wird eine Anpassung von dem geschlossenen Verdeck 3 mit Fließheck-Charakter und entsprechend niedrigeren Ladeöffnung hin zu einem einheitlich hohen und kompakten Überrollbügel in der geöffneten Stellung geschaffen, der so auch ein hoch aufragendes Beladen von der rückwärtigen Ladefläche in den Bereich einer Rückbank der Fahrgastzelle 1 hinein problemlos erlaubt.

In einer bevorzugten Alternative ist die Heckscheibe 14 an der beweglichen Einrichtung angeordnet, also hier der beweglichen D-Säule 10, und steht mit der Heckklappe 16 nur in abdichtendem Kontakt. Da sich diese Ausführungsform äußerlich kaum von der Darstellung von Fig. 5 unterscheidet, wird sie unter ungeänderter Bezugnahme auf diese Abbildung beschrieben: Die Heckscheibe 14 ist lösbar und vorzugsweise zum rückwärtigen Öffnen der Fahrgastzelle 1 in Richtung eines Pfeils P schwenkbar um eine horizontale Achse A angeordnet. Die Achse A befindet sich in einem Dachbereich 2 der Fahrgastzelle 1, also an der beweglichen D-Säule 10. So läßt sich die Heckscheibe 14 durch Schwenken um die Achse A herum nach oben hin öffnen, wie dies bei den heutigen Touring-Fahrzeugen bekannt ist. Beim Öffnen des Heckverdecks 3 wird die Heckscheibe 14 in dieser Ausführungsform stets nach vorne bis hin zur C-Säule 6 mitgenommen. Es entsteht bei der dargestellten Ausführungsform also vorteilhafterweise auch bei geöffnetem Faltverdeck 3 im vorderen Fahrzeugteil eine abgeschlossene Fahrgastzelle 1 und in dem in Fahrtrichtung hinten liegenden Heckbereich 9 eine Ladefläche, die ähnlich einem Pick-up ist.

Falls die Ladefläche im Heckbereich 9 wasserfest und der Anschluß der Heckscheibe 14 zu einer Rücksitzbank der Fahrgastzelle 1 abdichtend ausgeführt ist, kann der geöffnete Heckbereich 9 auch bei allen Witterungsbedingungen offen bleiben. Diese Lösung bietet sich vorwiegend bei sehr großen Fahrzeugen an, die ein entsprechend anpaßbares Ladevolumen aufweisen. Sie ist flexibel um vorstehen beschriebene technische Merkmale in einem Baukastensystem erweiterbar.

Für die vorstehend beschriebene Variante kann auch eine leicht zu demontierende Heckscheibe 14 vorgesehen werden, um einen noch größeren Ladebereich bei umgeklappter Rücksitzbank zu erzeugen. Hierzu ist es möglich, die Heckscheibe 14 zur Gewichtsminderung aus einem bruchfesten Kunststoff herzustellen, wie z.B. einem Acrylglas.

Aufgrund des hydraulischen Antriebs kann ein vorstehend beschriebenes Verdeck ohne weitere Handgriffe schnell und zuverlässig von einer geöffneten in einer geschlossene Stellung überführt werden und umgekehrt. So ist es beispielsweise bei ferngesteuerter Verriegelung des Fahrzeugs möglich, automatisch auch das Verdeck zu schließen, um das Fahrzeug bzw. den Innenraum der Fahrgastzelle besser gegen Fremdeinwirkungen zu schützen, z.B. gegen Diebstahl oder Vandalismus. Andererseits in ein Fahrzeug bzw. eine Fahrgastzelle 1 so auch optimal gegen überraschend einsetzenden Regen oder ähnliche Umwelteinflüsse geschützt, auch in Abwesenheit eines Fahrers oder Besitzers.

### Bezugszeichenliste

- 1: Fahrgastzelle
- 2: Dachbereich
- 3: Verdeck
- 4: Rollverdeck
- 5:
- 6: starre C-Säule
- 7:
- 8: Windschutzscheibe
- 9: Heckbereich
- 10: bewegliche D-Säule
- 11:
- 12: flexible Abdeckung
- 13: transparentes Element
- 14: Heckscheibe
- 15:
- 16: Heckklappe
- 17: verstärkter überlappender Bereich
- 18: Randbereich
- 19: Speicher des Rollverdecks (4)

- A: Achse
- P: Öffnungs-/Schließbewegungsrichtung von (14)
- R: Rotationsbewegung von (10)

## Patentansprüche

1. Verdeck für ein Kraftfahrzeug, insbesondere ein geländegängiges Freizeitfahrzeug, bei dem ein Abschnitt aus einer mindestens teilweise flexiblem Abdeckung vorzugsweise in einem rückwärtigen Endbereich des Fahrzeugs zum wahlweisen Schließen oder Öffnen eines Heckbereichs des Fahrzeugs angeordnet ist,
**dadurch gekennzeichnet, dass**
- die flexible Abdeckung (12) zwischen einer beweglichen Einrichtung und einer starren Säule (6) derart anordnet und mit diesen so verbunden ist, daß
- durch ein Verschieben der beweglichen Einrichtung gegen die Fahrtrichtung eines so ausgerüsteten Fahrzeugs hin auf die starre Säule (6) zu eine Öffnung im Dachbereich (2) über einem Lade- bzw. Kofferraum bzw. in einem dementsprechenden Bereich erzeugt wird,
- wobei die bewegliche Einrichtung als in einem Dachbereich (2) umlaufender Strukturrahmen oder
- als bewegliche Säule (10) ausgeführt ist und
- die bewegliche Einrichtung im wesentlichen translatorisch bewegbar ist.

2. Verdeck nach Anspruch 1,
**dadurch gekennzeichnet, daß** die bewegliche Einrichtung in jeder Stellung des Verdecks (3) als Überrollbügel dient.

3. Verdeck nach Anspruch 1 oder 2,
**dadurch gekennzeichnet, daß** die starre Säule als C-Säule (6) und die bewegliche Einrichtung als bewegliche D-Säule (10) ausgebildet sind.

4. Verdeck nach einem der vorhergehenden Ansprüche, **dadurch gekennzeichnet, daß** der Abschnitt der flexiblen Abdeckung (12) innerhalb des Verdecks (3) insbesondere als Stoffverdeck ausgeführt ist und in einer geöffneten Stellung zwischen der starren Säule (6) und der beweglichen Einrichtung verstaut ist.

5. Verdeck nach einem der vorhergehenden Ansprüche, **dadurch gekennzeichnet, daß** der Abschnitt der flexiblen Abdeckung (12) abdichtend zwischen der beweglichen Einrichtung und einer starren Säule (6) angeordnet ist.

6. Verdeck nach einem der vorhergehenden Ansprüche, **dadurch gekennzeichnet, daß** der Abschnitt der flexiblen Abdeckung (12) an eine Mehrgelenkkette gekoppelt ist, insbesondere ein Mehrgelenkkette in Form einer gekoppelten Reihe von Viergelenkgliedern mit vorbestimmter Kinematik.

7. Verdeck nach einem der vorhergehenden Ansprüche, **dadurch gekennzeichnet, daß** an dem Abschnitt der flexiblen Abdeckung (12) im Bereich der beweglichen Einrichtung eine stabile und insbesondere harte Fläche bzw. ein verstärkter überlappender Bereich (17) zur Abdeckung bzw. Aufnahme der Falten des Stoffverdecks im geöffneten Zustand des Verdecks (3) angeordnet ist.

8. Verdeck nach einem der vorhergehenden Ansprüche, **dadurch gekennzeichnet, daß** die bewegliche Einrichtung in Form einer Manschette ausgebildet ist zur mindestens teilweise umschließenden Aufnahme der flexiblen Abdeckung (12) in der geöffneten Stellung des Verdecks (3).

9. Verdeck nach einem der vorhergehenden Ansprüche, **dadurch gekennzeichnet, daß** an der beweglichen Einrichtung Anbauteile angeordnet sind, insbesondere eine dritte Bremsleuchte in einem oberen Bereich bzw. an den Dachbereich (2) angrenzenden Bereich der beweglichen Einrichtung.

10. Verdeck nach einem der vorhergehenden Ansprüche, **dadurch gekennzeichnet, daß** beim Auslösen eines Öffnungsvorgangs eine Heckscheibe (14) in eine Heckklappe (16) einfahrbar ausgebildet ist.

11. Verdeck nach einem der vorhergehenden Ansprüche 1 - 9, **dadurch gekennzeichnet, daß** eine Heckscheibe (14) an der beweglichen Einrichtung angeordnet ist, insbesondere lösbar und vorzugsweise zum rückwärtigen Öffnen der Fahrgastzelle (1) schwenkbar um eine horizontale Achse (A), die in einem Dachbereich (2) der Fahrgastzelle (1) angeordnet ist.

12. Verdeck nach einem der vorhergehenden Ansprüche, **dadurch gekennzeichnet, daß** das Verdeck (3) als komplettes System im abgelegten Zustand in Form eines Moduls anlieferbar und einsetzbar ist.

13. Verdeck nach einem der vorhergehenden Ansprüche, **dadurch gekennzeichnet, daß** sich ein Rollverdeck (4) aus einem Bereich der starren Säule (6) in Fahrtrichtung in einem Dachbereich (2) der Fahrgastzelle (1) erstreckt, insbesondere bis zu einer Windschutzscheibe (8).

14. Verdeck nach dem vorhergehenden Anspruch, **dadurch gekennzeichnet, daß** für das Rollverdeck (4) und das Verdeck (3) zusammen ein gemeinsamer Antrieb vorgesehen ist, insbesondere ein hydraulischer Antrieb.

15. Personenkraftfahrzeug, insbesondere ein geländegängiges Freizeitfahrzeug, bei dem ein Abschnitt aus mindestens teilweise flexiblem Material in einem rückwärtigen Fahrzeug-Endbereich zur wahlweisen Abdeckung eines Heckbereichs (9) des Freizeitfahrzeugs angeordnet ist,
**dadurch gekennzeichnet, dass**
das Verdeck (3) nach einem oder mehreren der vorhergehenden Ansprüchen 1 - 14 aufgebaut ist.

## Claims

1. A top for a motor vehicle, especially an all-terrain recreational vehicle, wherein a portion of an at least partially flexible cover is preferably arranged in a trailing end region of the vehicle for selectively closing or opening a tail region of the vehicle, **characterised in that**
- the flexible cover (12) is arranged between a movable arrangement and a rigid column (6) in such a way and is connected thereto such that
- displacement of the movable arrangement, counter to the direction of travel of a vehicle thus equipped, toward the rigid column (6) produces an opening in the roof region (2) above a loading space or boot or in a corresponding region,
- wherein the movable arrangement is constructed as a peripheral structural frame within a roof region (2) or
- as a movable column (10) and
- the movable arrangement may be moved in a substantially translational manner.

2. A top according to claim 1,
**characterised in that** the movable arrangement acts as a roll bar in each position of the top (3).

3. A top according to either claim 1 or claim 2,
**characterised in that** the rigid column is constructed as a C column (6) and the movable arrangement is constructed as a movable D column (10).

4. A top according to any one of the preceding claims,
**characterised in that** the portion of the flexible cover (12) is configured within the top (3), especially, as a fabric top and is stowed in an opened position between the rigid column (6) and the movable arrangement.

5. A top according to any one of the preceding claims,
**characterised in that** the portion of the flexible cover (12) is arranged so as to produce a seal between the movable arrangement and a rigid column (6).

6. A top according to any one of the preceding claims,
**characterised in that** the portion of the flexible cover (12) is coupled to a multiple-bar chain, espcially a multiple-bar chain in the form of a coupled series of four-bar members with predetermined kinematics.

7. A top according to any one of the preceding claims,
**characterised in that** a stable and, especially, hard surface or a reinforced overlapping region (17) is arranged on the portion of the flexible cover (12) in the region of the movable arrangement for covering or receiving the folds of the fabric top when the top (3) is opened.

8. A top according to any one of the preceding claims,
**characterised in that** the movable arrangement is in the form of a sleeve for at least partially enclosing the flexible cover (12) in the opened position of the top (3).

9. A top according to any one of the preceding claims,
**characterised in that** attached parts are arranged on the movable arrangement, especially a third brake light in an upper region or region adjacent to the roof region (2) of the movable arrangement.

10. A top according to any one of the preceding claims,
**characterised in that** on initiating an opening process, a rear window (14) is constructed such that it may be introduced into a tailgate (16).

11. A top according to any one of the preceding claims 1 to 9,
**characterised in that** a rear especially particular detachably and preferably, for backward opening of the passenger compartment (1), so as to be pivotable about a horizontal axis (A) arranged in a roof region (2) of the passenger compartment (1).

12. A top according to any one of the preceding claims,
**characterised in that** the top (3) may be supplied and inserted as a complete system in the state in which it is deposited, in the form of a module.

13. A top according to any one of the preceding claims,
**characterised in that** a rolling top (4) extends from a region of the rigid column (6), in the direction of travel, in a roof region (2) of the passenger compartment (1), especially up to a windscreen (8).

14. A top according to the preceding claim,
**characterised in that** there is jointly provided for the rolling top (4) and the top (3) a common drive, especially a hydraulic drive.

15. A passenger vehicle, especially an all-terrain recreational vehicle, wherein a portion made from at least partially flexible material is arranged in a trailing vehicle end region for selectively covering a tail region (9) of the recreational vehicle,
**characterised in that** the top (3) is constructed according to one or more of the preceding claims 1 to 14.

## Revendications

1. Capote pour un véhicule automobile, en particulier un véhicule de loisir tout-terrain, dans laquelle un segment d'une couverture au moins partiellement flexible est de préférence disposé dans une zone finale arrière du véhicule pour la fermeture ou l'ouverture, au choix, d'une zone arrière du véhicule,
**caractérisée en ce que**
- la couverture flexible (12) est disposée entre un dispositif mobile et une colonne fixe (6) et reliée à ceux-ci de sorte qu'
- une ouverture est dégagée dans la zone de toit (2) au-dessus d'un volume de chargement ou d'un coffre, ou dans une zone correspondante par un déplacement du dispositif mobile à l'opposé de la direction de la marche d'un véhicule ainsi équipé vers la colonne fixe (6),
- le dispositif mobile est un cadre de structure périphérique de la zone de toit (2) ou
- une colonne mobile (10), et
- le dispositif mobile peut être déplacé essentiellement en translation.

2. Capote selon la revendication 1,
**caractérisé en ce que**
le dispositif mobile sert d'arceau de sécurité dans chaque position de la capote (3).

3. Capote selon la revendication 1 ou 2,
**caractérisée en ce que**
la colonne fixe est une colonne C (6) et le dispositif mobile une colonne D mobile (10).

4. Capote selon l'une des revendications précédentes,
**caractérisée en ce que**
le segment de la couverture flexible (12) à l'intérieur de la capote (3) est en particulier une capote en tissu rangée en position ouverte, entre la colonne fixe (6) et le dispositif mobile.

5. Capote selon l'une des revendications précédentes,
**caractérisée en ce que**
le segment de la couverture flexible (12) est disposé de manière à réaliser une étanchéité entre le dispositif mobile et une colonne fixe (6).

6. Capote selon l'une des revendications précédentes,
**caractérisée en ce que**
le segment de la couverture flexible (12) est couplé à une chaîne cinématique à plusieurs articulations, en particulier à une chaîne cinématique à plusieurs articulations selon une série de quatre articulations présentant une cinématique prédéterminée.

7. Capote selon l'une des revendications précédentes,
**caractérisée en ce que**
sur le segment de la couverture flexible (12), dans la zone du dispositif mobile, une surface stable et en particulier dure ou une zone chevauchante renforcée (17) recouvre ou loge les plis de la capote en tissu (3) à l'état ouvert.

8. Capote selon l'une des revendications précédentes,
**caractérisée en ce que**
le dispositif mobile en forme de manchette entoure au moins partiellement la couverture flexible (12) en position ouverte de la capote (3).

9. Capote selon l'une des revendications précédentes,
**caractérisée en ce que**
des éléments rapportés sont disposés sur le dispositif mobile, en particulier un troisième feu de stop, dans une zone supérieure ou dans une zone du dispositif mobile voisine de la zone de toit (2).

10. Capote selon l'une des revendications précédentes,
**caractérisée en ce que**
lors du déclenchement d'un processus d'ouverture une lunette arrière (14) peut entrer dans un hayon (16).

11. Capote selon l'une des revendications précédentes 1 à 9,
**caractérisée en ce qu'**
pour l'ouverture arrière de l'habitacle (1) une lunette arrière (14) est disposée sur le dispositif mobile, en particulier de façon amovible et de préférence de façon pivotante autour d'un axe horizontal (A) d'une zone de toit (2) de l'habitacle (1).

12. Capote selon l'une des revendications précédentes,
**caractérisée en ce que**
la capote (3) est disponible et utilisable comme système complet à l'état rangé en forme de module.

13. Capote selon l'une des revendications précédentes,
**caractérisée en ce qu'**
une capote roulante (4) s'étend depuis une zone de la colonne fixe (6) dans la direction de la marche dans une zone de toit (2) de l'habitacle (1), en particulier jusqu'à un pare-brise (8).

14. Capote selon la revendication précédente,
**caractérisée en ce que**
la capote roulante (4) et la capote (3) sont entraînées en commun en particulier par un entraînement hydraulique.

15. Véhicule particulier, notamment un véhicule de loisir tout-terrain, dans lequel un segment d'un matériau au moins partiellement flexible est disposé dans une zone finale arrière du véhicule pour recouvrir, au choix, une zone arrière (9) du véhicule de loisir,
**caractérisé en ce que**
la capote (3) est réalisée selon une ou plusieurs des revendications précédentes 1 à 14.
